# DEMANDE DE BREVET EUROPEEN

(11) **EP 4 293 215 A1**
(43) Date de publication de la demande: **20.12.2023**
(21) Numéro de dépôt: 23176950.6
(22) Date de dépôt: 02.06.2023
(51) Int. Cl.: F02K 1/72, F02K 1/82

(54) **NACELLE DE MOTEUR D'AÉRONEF POURVUE D'UN INVERSEUR DE POUSSÉE À STRUCTURE D'ÉJECTION MOBILE**

(30) Priorité: 14.06.2022 FR 2205762
(71) Demandeur: Airbus Operations SAS, 31060 Toulouse (FR)
(72) Inventeur: CHELIN, Frédéric, 31060 TOULOUSE (FR); BOURDEAU, Christophe, 31060 TOULOUSE (FR); BELLANGER, Alexandre, 31060 TOULOUSE (FR); DAVIS, Lauren, 31060 TOULOUSE (FR)
(74) Mandataire: Gevers & Orès

(57) **Abrégé**

- Nacelle de moteur d'aéronef pourvue d'un inverseur de poussée à structure d'éjection mobile.
- La nacelle (1) comporte un inverseur de poussée (7) comprenant un capot (10) mobile en translation et une structure d'éjection (9) également mobile en translation et formant avec le capot (10) un ensemble mobile (17), ledit ensemble mobile (17) étant configuré pour pouvoir être amené, alternativement, dans une position fermée dans laquelle la structure d'éjection (9) est introduite dans un logement (18) formé dans la nacelle (1) et le capot (10) ferme une ouverture d'éjection (12) dans la nacelle (1), et dans une position ouverte (P2) dans laquelle le capot (10) libère l'ouverture d'éjection (12) dans la nacelle (1) et la structure d'éjection (9) est située dans cette ouverture d'éjection (12), le positionnement de la structure d'éjection é(9) dans le logement (18) dans la positionnée fermée permettant notamment de libérer de la place au niveau de l'ouverture d'éjection (12) et de réduire l'encombrement de l'inverseur de poussée (7).

## Description

### Domaine technique

La présente invention concerne une nacelle pour un moteur d'aéronef, qui est pourvue d'un inverseur de poussée à structure d'éjection mobile.

### Etat de la technique

On sait que les moteurs d'un aéronef, par exemple d'un avion de transport, sont pourvus d'un inverseur de poussée dont la fonction est de freiner l'aéronef lors d'un atterrissage, en produisant un effort de contre-poussée. L'inverseur de poussée est intégré dans la nacelle entourant le moteur, par exemple un turboréacteur à double flux.

De façon usuelle, l'inverseur de poussée comporte généralement un capot mobile en translation, alternativement, entre une position ouverte (dite déployée) dans laquelle il ouvre un passage (ou ouverture d'éjection) dans la nacelle et découvre des grilles d'éjection et de déviation de flux, et une position fermée dans laquelle il ferme ce passage.

Lors du déploiement de l'inverseur de poussée et du déplacement du capot dans sa position ouverte, des portes viennent obturer la veine d'air du moteur afin de dévier une partie du flux vers les grilles d'éjection et ensuite vers l'extérieur de la nacelle au travers desdites grilles d'éjection, ce qui génère un effort aérodynamique de contre-poussée.

Les grilles d'éjection sont, généralement, formées de cascades comprenant un nombre élevé de déflecteurs et elles sont solidaires de la nacelle de manière à présenter un encombrement relativement important.

Un objectif de la présente invention est de réduire l'encombrement de ce genre d'inverseur de poussée.

### Exposé de l'invention

La présente invention concerne une nacelle pour un moteur d'aéronef permettant d'atteindre cet objectif, ladite nacelle comportant au moins un inverseur de poussée comprenant une structure d'éjection et un capot mobile en translation.

Selon l'invention, la structure d'éjection est également mobile en translation et elle est rendue solidaire dudit capot de manière à former avec ce dernier un ensemble mobile, ledit ensemble mobile étant configuré pour pouvoir être amené, alternativement, dans au moins l'une ou l'autre des deux positions suivantes :
- une position fermée, dans laquelle la structure d'éjection est introduite, au moins en partie, dans un logement formé dans la nacelle, et dans laquelle le capot ferme une ouverture d'éjection dans la nacelle ; et
- une position ouverte, dans laquelle le capot libère l'ouverture d'éjection dans la nacelle et la structure d'éjection est située dans ladite ouverture d'éjection.

Ainsi, grâce à l'invention, dans la position fermée, la structure d'éjection est amenée dans un logement de la nacelle. Elle n'est donc pas positionnée au niveau du passage (ou ouverture d'éjection), dans la positionnée fermée. Ceci permet de libérer de la place au niveau de l'ouverture d'éjection et réduit ainsi l'encombrement de l'inverseur de poussée.

De façon avantageuse, ledit logement est formé dans un carter de soufflante de la nacelle.

En outre, avantageusement, le capot comprend au moins un caisson pourvu d'un cadre avant. De préférence, ce cadre avant est réalisé en une seule pièce.

Dans un mode de réalisation préféré, l'inverseur de poussée comporte une pluralité de portes configurées pour pouvoir se déployer à l'intérieur d'un canal d'écoulement de flux afin de dévier le flux vers la structure d'éjection dans ladite position ouverte, et lesdites portes sont articulées sur ledit cadre avant du caisson. De façon avantageuse, au moins certaines desdites portes sont pourvues d'au moins un panneau d'atténuation acoustique.

En outre, dans un mode de réalisation particulier, au moins une paroi interne du caisson est pourvue d'au moins un panneau d'atténuation acoustique.

Par ailleurs, dans un mode de réalisation préféré, la structure d'éjection comprend au moins deux chariots mobiles, et chacun desdites chariots mobiles est monté coulissant dans des rails.

De plus, avantageusement, chacun des chariots mobiles comporte des déflecteurs qui sont liés ensemble à l'aide de deux poutres d'extrémité, et chacune desdites poutres d'extrémité est configurée pour pouvoir coulisser dans l'un desdits rails.

En outre, de façon avantageuse, le capot est formé d'au moins deux parties de capot, et chacune desdites parties de capot est montée coulissante dans lesdits rails (utilisés par lesdits chariots mobiles).

Par ailleurs, de façon avantageuse la structure d'éjection comporte une pluralité de déflecteurs.

Dans un premier mode de réalisation, au moins certains desdits déflecteurs comprennent une plaque déflectrice présentant une face concave dite face amont et une face convexe dite face aval, et la face amont et la face aval de chaque plaque déflectrice présentent des profils courbes différents.

En outre, dans un second mode de réalisation, au moins certains desdits déflecteurs comprennent une plaque déflectrice présentant une face concave dite face amont et une face convexe dite face aval ainsi qu'une extrémité dite d'entrée et une extrémité dite de sortie, et chacun desdits déflecteurs est pourvu d'un becquet qui est solidaire de l'extrémité de sortie de la plaque déflectrice et qui est agencé transversalement à la plaque déflectrice.

De plus, de façon avantageuse, au moins certains desdits déflecteurs de la structure d'éjection présentent au moins l'une des caractéristiques suivantes :
- au moins deux desdits déflecteurs sont décalés radialement l'un par rapport à l'autre ;
- au moins certains desdits déflecteurs sont agencés pour créer des voies d'éjection dont au moins certaines présentent des largeurs variables ; et
- au moins certains desdits déflecteurs présentent des caractéristiques variables en fonction de leur emplacement dans la structure d'éjection.

### Brève description des figures

Les figures annexées feront bien comprendre comment l'invention peut être réalisée. Sur ces figures, des références identiques désignent des éléments semblables.
La figure 1 est une vue schématique en coupe longitudinale d'une nacelle de moteur d'aéronef, pourvue d'un inverseur de poussée à structure d'éjection mobile, dans une position ouverte (ou déployée).
La figure 2 est une vue schématique, en coupe longitudinale, d'une partie de nacelle, montrant notamment un inverseur de poussée, dans une position fermée.
La figure 3 est une vue schématique, en coupe longitudinale, d'un inverseur de poussée dans une position ouverte.
La figure 4 est une vue partielle, en perspective, d'une nacelle, montrant une partie d'un mode de réalisation particulier d'une structure d'éjection.
La figure 5 est une vue similaire à celle de la figure 2, dont la nacelle est pourvue de panneaux de traitement acoustique.
La figure 6A est une vue schématique, en coupe longitudinale, d'une partie de nacelle dans une position fermée.
La figure 6B est une vue similaire à celle de la figure 6A, dans une position intermédiaire d'ouverture.
La figure 6C est une vue similaire à celles des figures 6A et 6B, dans une position ouverte.
La figure 7 illustre schématiquement un premier mode de réalisation d'un déflecteur d'une structure d'éjection.
La figure 8 illustre schématiquement un second mode de réalisation d'un déflecteur d'une structure d'éjection.

### Description détaillée

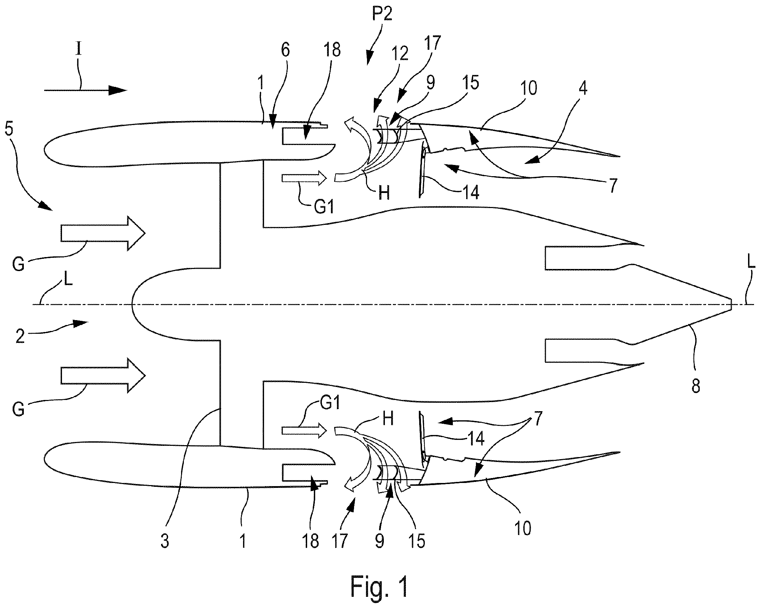

La nacelle 1 représentée schématiquement dans un mode de réalisation particulier sur la figure 1 et permettant d'illustrer l'invention est une nacelle d'un moteur 2, par exemple d'un turboréacteur double flux, d'un aéronef (non représenté).

De façon usuelle, un turboréacteur double flux est apte à générer par l'intermédiaire d'une soufflante 3 un flux d'air chaud issu d'une chambre de combustion du turboréacteur et un flux d'air froid qui circule à l'extérieur du turboréacteur à travers un canal 4 annulaire formé entre un carénage du turboréacteur et une paroi interne de la nacelle 1. Les deux flux d'air sont éjectés du turboréacteur par l'arrière de la nacelle 1.

Dans l'exemple de la figure 1, le moteur 2, en l'occurrence un turboréacteur double flux, est entouré, de façon usuelle, de la nacelle 1. La nacelle 1 présente une structure tubulaire d'axe longitudinal L-L, comprenant successivement dans le sens d'une flèche I (de l'avant vers l'arrière) sur la figure 1, une entrée d'air 5 à travers laquelle pénètre un flux d'air comme illustré par des flèches G, une section 6 destinée à entourer la soufflante 3 du turboréacteur, et une section abritant un inverseur de poussée 7 et destinée à entourer la chambre de combustion du turboréacteur, et elle est terminée par une tuyère d'éjection 8.

Dans la présente description :
- le terme « longitudinal » s'applique à une direction parallèle à l'axe longitudinal L-L ;
- le terme « radial » s'applique à une direction orthogonale à l'axe longitudinal L-L ;
- le terme « arrière » est défini dans le sens indiqué par la flèche I, selon l'écoulement du flux d'air G dans la nacelle 1 ; et
- le terme « avant » est défini en son opposé à celui indiqué par la flèche I, donc en sens opposé à l'écoulement du flux d'air G dans la nacelle 1.

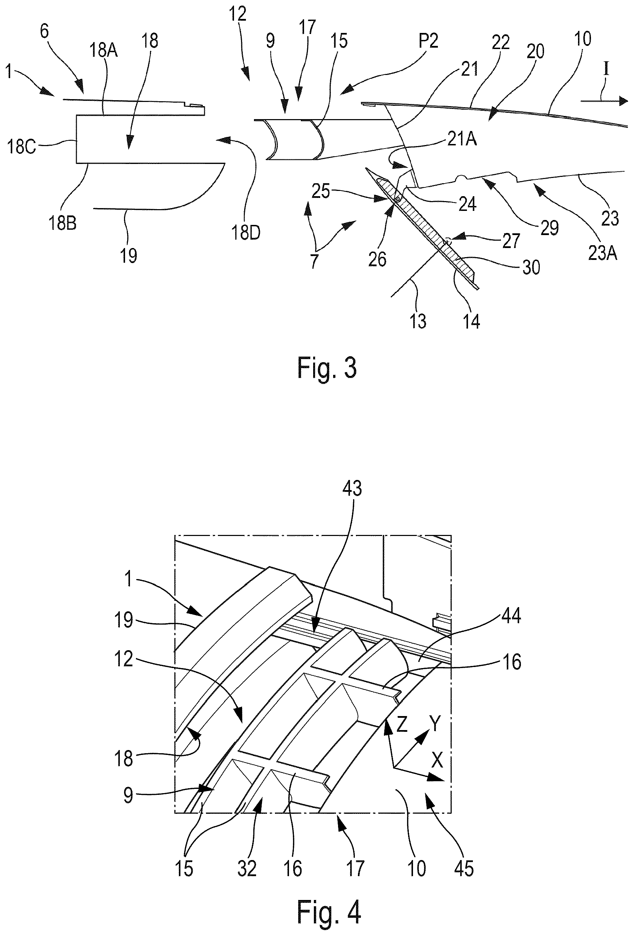

L'inverseur de poussée 7 de la nacelle 1 comprend une structure d'éjection 9 (et de déviation de flux), représentée partiellement dans un exemple particulier sur la figure 4.

L'inverseur de poussée 7 a pour fonction d'améliorer, lors de l'atterrissage de l'aéronef équipé de la nacelle 1 et du moteur 2, la capacité de freinage en redirigeant vers l'avant (en sens opposé à celui de la flèche I) au moins une partie de la poussée engendrée par le moteur 2.

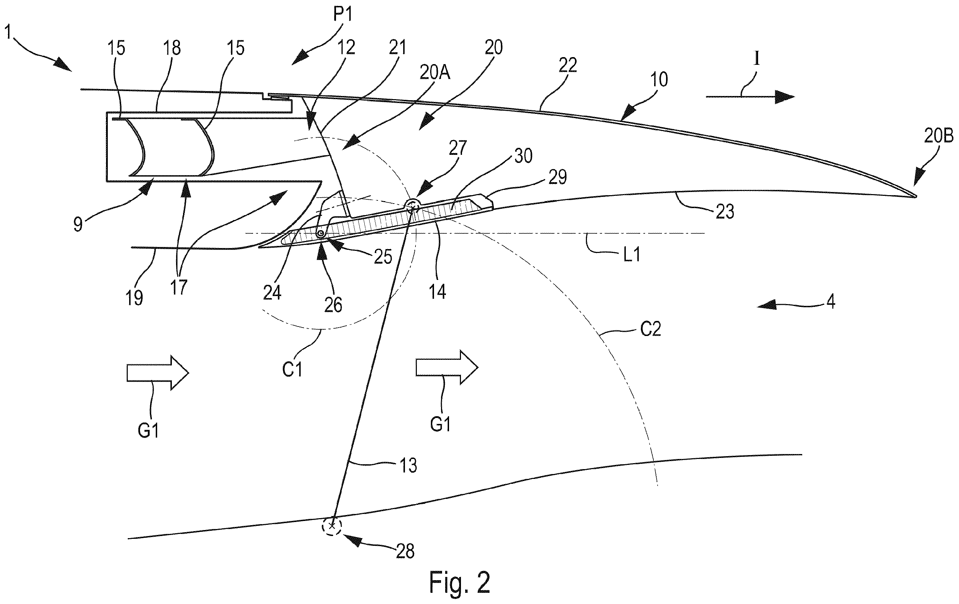

Pour ce faire, la nacelle 1 comporte un capot 10 mobile, à savoir coulissant. Ce capot 10 est mobile en translation parallèlement à la direction de l'axe longitudinal L-L, et ceci dans le sens illustré par la flèche I ainsi que dans le sens opposé, et il est configuré de manière à ce qu'en reculant (dans le sens de la flèche I) lors d'une phase d'ouverture, il découvre une ouverture dite d'éjection 12. Lors du déplacement du capot 10 mobile, des portes 14 (ou panneaux de blocage) associées chacune à une liaison mécanique 13 (figure 2) se déploient à l'intérieur du canal 4 afin de bloquer la sortie d'un flux G1 (correspondant à la partie du flux G circulant dans le canal 4) en flux direct par l'arrière. Le flux est alors dévié et éjecté à travers la structure d'éjection 9 située dans l'ouverture d'éjection 12, comme illustré par des flèches H sur la figure 1, créant ainsi l'inversion de poussée.

Sur la figure 4, on a représenté, à titre d'exemple, une partie d'un mode de particulier d'une structure d'éjection 9. Cette structure d'éjection 9 comporte une pluralité de déflecteurs 15 et 16, à savoir :
- des déflecteurs orbitaux 15 qui sont agencés suivant une direction (illustrée par une flèche Y) normale à celle (illustrée par une flèche X) de l'axe moteur (axe longitudinal L-L) du moteur 2 et qui ont comme fonction usuelle de dévier le flux d'air pour générer l'inversion de poussée ; et
- des déflecteurs latéraux 16 qui sont agencés suivant la direction de l'axe moteur illustrée par la flèche X et qui agissent sur le flux sortant de l'inverseur de poussée 7, en particulier pour éviter qu'il n'atteigne certaines zones.

La structure d'éjection 9 est également mobile en translation, comme le capot 10. De plus, la structure d'éjection 9 est rendue solidaire du capot 10 de manière à former avec ce dernier un ensemble mobile 17. Pour ce faire, la structure d'éjection 9 est fixée au capot 10. Tout type de moyen de fixation usuel, par exemple une soudure, des vis ou des rivets, peut être employé à cet effet.

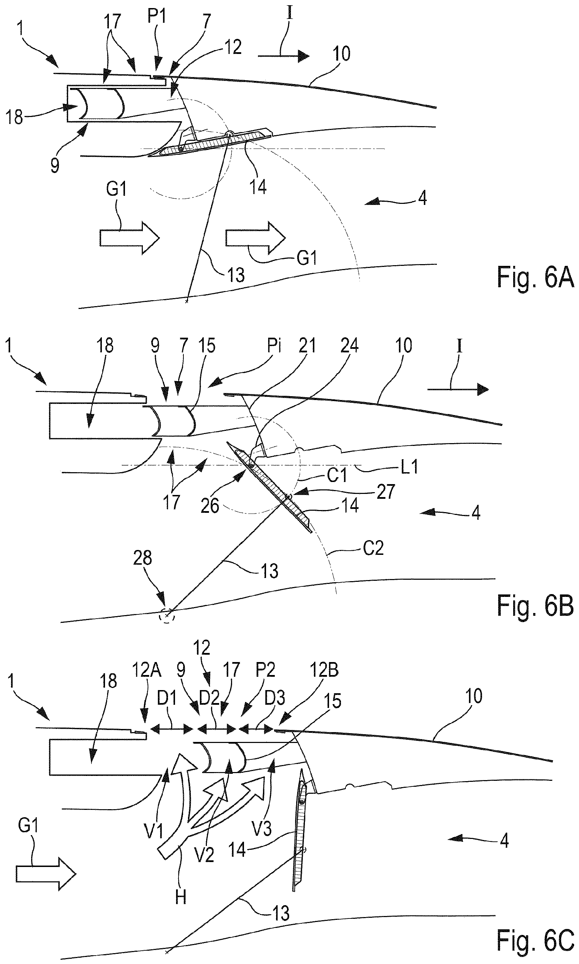

Cet ensemble mobile 17 qui est mobile en translation selon une direction parallèle à l'axe longitudinal L-L est configuré pour pouvoir être amené, alternativement, au moins, dans l'une ou l'autre des deux positions (stables) suivantes :
- une position fermée P1, représentée sur les figures 2 et 6A notamment, dans laquelle la structure d'éjection 9 est introduite, au moins en partie, dans un logement 18 formé dans la nacelle 1, comme précisé ci-dessous. Dans cette position fermée, le capot 10 ferme l'ouverture d'éjection 12 dans la nacelle 1 ; et
- une position ouverte P2 (ou déployée), représentée sur les figures 1, 3 et 6C, dans laquelle le capot 10 libère l'ouverture d'éjection 12 (c'est-à-dire n'est plus situé longitudinalement au niveau de l'ouverture d'éjection 12) et la structure d'éjection 9 est, quant à elle, située à l'intérieur de cette ouverture d'éjection 12.

Le logement 18 destiné à recevoir la structure d'éjection 9 (au moins en partie) dans la position fermée P1, est formé dans un carter 19 de la soufflante 3 de la nacelle 1, au niveau de la section 6, comme représenté sur la figure 3. Le logement 18 correspond à un espace qui est créé dans le carter 19 et qui est délimité, de préférence, par deux parois longitudinales 18A et 18B et une paroi radiale 18C.

Le logement 18 présente, par exemple, une forme annulaire dont les parois longitudinales 18A et 18B sont écartées d'une distance radiale adaptée à la longueur radiale de la structure d'éjection 9 de manière à pouvoir recevoir la structure d'éjection 9.

Le logement 18 présente une ouverture 18D (figure 3) vers l'arrière, par laquelle la structure d'éjection 9 pénètre dans le logement 18 ou en sort.

Dans un mode de réalisation préféré, le logement 18 est configuré pour recevoir toute la structure d'éjection 9 dans la position fermée P1, comme représenté sur les figures 2, 5 et 6A.

Ce mode de réalisation préféré permet de réduire au maximum l'encombrement de la structure d'éjection 9. Ce mode de réalisation préféré est particulièrement adapté à des structures d'éjection 9 de longueur réduite. En particulier, ce mode de réalisation préféré est adapté à un mode de réalisation précisé ci-dessous, d'une structure d'éjection 9 comprenant un nombre réduit de déflecteurs orbitaux 15, par exemple 1 à 6 déflecteurs orbitaux 15, une telle structure d'éjection 9 permettant de remplacer une grille d'éjection usuelle à cascades (plus longue et comprenant un nombre élevé de déflecteurs orbitaux).

Dans un autre mode de réalisation (non représenté), le logement est configuré pour recevoir uniquement une partie longitudinale de la structure d'éjection dans la position fermée. Ce mode de réalisation est, notamment, adapté à une nacelle dont l'espace disponible est réduit au niveau du carter 19 de la soufflante 3 et/ou dont la structure d'éjection est relativement longue.

Dans un mode de réalisation préféré, le capot 10 comprend au moins un caisson 20 (figure 2), et de préférence une pluralité de caissons. Chacun de ces caissons 20 est pourvu, à une extrémité avant 20A, d'un cadre avant 21.

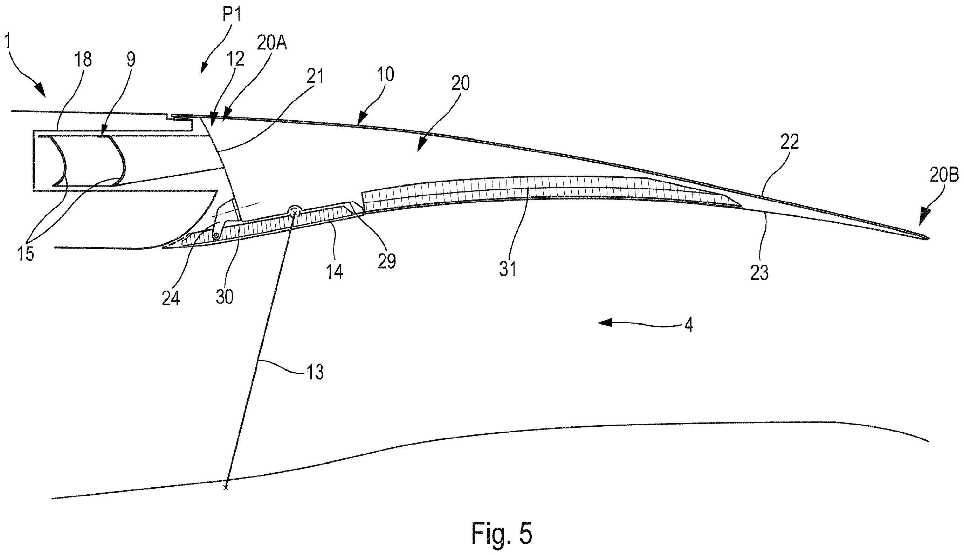

Chaque cadre avant 21 est lié, comme représenté sur la figure 2, à une paroi 22 radialement externe et à une paroi 23 radialement interne du capot 10, aux extrémités avant de ces parois 22 et 23. Dans un mode de réalisation particulier représenté sur les figures 2 et 5, les parois 22 et 23 se rejoignent à une extrémité arrière 20B du caisson 20.

Ce cadre avant 21 permet de rigidifier l'ensemble des parois 22 et 23 et donc le caisson 20. Ceci permet notamment de réduire ou supprimer des raidisseurs qui, de façon usuelle, sont agencés dans le capot 10, généralement à l'intérieur de la paroi 22, et sont nécessaires pour obtenir la rigidité souhaitée. On est ainsi en mesure de mieux maîtriser la chaîne de cotes et le jeu apparaissant à l'avant de la porte 14 qui génère des pertes aérodynamiques. De plus, la suppression des raidisseurs permet de prévoir des déflecteurs 15, 16 ayant une hauteur plus importante, ce qui permet d'augmenter leur efficacité.

La nacelle 1, telle que décrite ci-dessus, pourvue d'un logement 18 pour recevoir la structure d'éjection 9, permet également de gagner de la place, en particulier comme précisé ci-dessous pour agencer des panneaux d'atténuation acoustique à des endroits qui n'en disposaient pas et donc créer de nouvelles zones de traitement acoustique, ou, le cas échéant, pour agencer des panneaux d'atténuation acoustique plus grands et/ou plus épais.

Dans un mode préféré, le cadre avant 21 est réalisé en une seule pièce, ce qui permet de faciliter sa réalisation et sa mise en place, et augmente sa résistance mécanique par rapport à un capot réalisé en plusieurs parties.

Par ailleurs, dans un mode de réalisation préféré, l'inverseur de poussée 7 comporte une pluralité de portes 14, par exemple quatre ou cinq portes 14. Chacune de ces portes 14 est configurée pour se déployer à l'intérieur du canal 4 d'écoulement de flux afin de dévier le flux vers la structure d'éjection 9 dans la position ouverte P2 (figures 1, 3 et 6C).

Comme représenté notamment sur la figure 3, dans un mode de réalisation particulier, chacune des portes 14 est articulée sur le cadre avant 21 du ou de l'un des caissons 20 du capot 10.

Dans le mode de réalisation de la figure 3, la porte 14 est reliée par l'intermédiaire d'une pièce 24 de liaison, coudée, à la face avant 21A du cadre avant 21. La pièce 24 est fixée, par exemple soudée, vissée ou rivetée, sur la face avant 21A. De plus, elle est liée, à son extrémité libre 25, à une articulation 26. Cette articulation 26, par exemple un support pourvu d'un axe qui traverse un orifice à l'extrémité libre 25 de la pièce 24, est agencée sur la surface radialement externe de la porte 14. De plus, elle est positionnée à proximité de l'extrémité avant de la porte 14, comme représenté sur la figure 3.

En outre, la liaison mécanique 13 est articulée, d'une part par l'intermédiaire d'une articulation 27 à la porte 14 vers l'arrière de cette dernière, et d'autre part par l'intermédiaire d'une articulation 28 (figure 2) à un point fixe du moteur 2.

Comme illustré sur la figure 6B, lors d'un coulissement du capot 10 de la position fermée P1 des figures 2 et 6A, vers l'arrière dans le sens de la flèche I, l'articulation 26 solidaire du capot 10, via le cadre avant 21 et la pièce 24, se déplace selon une ligne L1 longitudinale (parallèle à l'axe longitudinal L-L (figure 1)).

Lors de ce déplacement longitudinal, l'articulation 27 tourne, quant à elle, simultanément :
- le long d'un arc de cercle d'un cercle C1 ayant, comme centre, l'articulation 26 ; et
- le long d'un arc de cercle d'un cercle C2 ayant, comme centre, l'articulation 28.

Cette double articulation de la porte 14 (autour des articulations 26 et 27) génère le déplacement de la porte 14 dans le canal 4 lors du déplacement du capot 10 vers l'arrière.

Par ailleurs, dans un mode de réalisation particulier, la paroi interne 23 comprend, comme représenté sur la figure 3, dans sa face radialement interne 23A, pour chaque porte 14, un logement 29 destiné à recevoir la porte 14 dans la position fermée P1 (figure 2). Dans l'exemple illustré sur la figure 3, le logement 29 présente une forme complémentaire de la forme de la porte 14.

Dans un mode de réalisation particulier, certaines des portes 14, et de préférence toutes les portes 14 sont pourvues d'au moins un panneau d'atténuation acoustique 30, comme représenté sur les figures 2 et 3 notamment. Dans ce mode de réalisation particulier, le panneau d'atténuation acoustique 30 est intégré dans la structure de la porte 14. Il peut également être fixé à la face radialement externe de la porte.

En outre, dans un mode de réalisation particulier, représenté sur la figure 5, la paroi interne 23 du caisson 20 est pourvue, à l'intérieur du caisson 20, d'au moins un panneau d'atténuation acoustique 31.

Le ou les panneaux d'atténuation acoustique 30 et 31 peuvent être de tout type usuel, apte à traiter différents bruits afin de les atténuer, et par exemple du type SDOF (pour « Single Degree Of Freedom » en anglais) à une seule cavité résonante ou du type DDOF (pour « Double Degree Of Freedom » en anglais) à double cavité résonante.

Par ailleurs, dans un mode de réalisation préféré, la structure d'éjection 9 est formée d'une pluralité de chariots mobiles 32, et de préférence de deux chariots mobiles 32. Chacun de ces chariots mobiles 32 est monté coulissant dans des rails 43, comme représenté sur la figure 4.

Dans le mode de réalisation de la figure 4, les déflecteurs orbitaux 15 de chacun des chariots mobiles 32 sont liés ensemble à l'aide de deux poutres d'extrémité 44, dont une seule est visible sur la figure 4. Chacune de ces poutres d'extrémité 44 est configurée pour pouvoir coulisser dans l'un desdits rails 43.

En outre, le capot 10 est formé d'une pluralité de parties 45 structurelles, et de préférence de deux parties 45. Chacune de ces parties 45 est montée coulissante dans des rails, et de préférence dans les rails 43 qui sont également utilisés par les chariots mobiles 32.

On décrit, ci-après, le mode de fonctionnement de l'inverseur de poussée 7 de la nacelle 1 telle que décrite ci-dessus, en référence aux figures 6A, 6B et 6 C.

Lors d'un fonctionnement habituel du moteur 2, l'inverseur de poussée 7 et l'ensemble mobile 17 sont placés dans la position fermée P1 représentée sur la figure 6A. Dans cette position fermée P1, la structure d'éjection 9 est introduite dans le logement 18 et le capot 10 ferme l'ouverture d'éjection 12 dans la nacelle 1. Le flux G1 (correspondant à la partie du flux G qui circule dans le canal 4) est ainsi éjecté en flux direct par l'arrière de la nacelle 1, comme montré sur la figure 6A, sans génération d'inversion de poussée.

Lorsque l'on souhaite générer une inversion de poussée, on commande, de façon usuelle, la translation de l'ensemble mobile 17 de la position fermée P1 vers l'arrière dans le sens de la flèche I. Le capot 10 et la structure d'éjection 9 sont ainsi déplacés vers l'arrière et les portes 14 se déploient, comme représenté sur la figure 6B qui illustre une position intermédiaire d'ouverture Pi.

A la fin de la translation, l'inverseur de poussée 7 et l'ensemble mobile 17 sont amenés dans la position ouverte P2 (ou déployée) représentée sur la figure 6C. Dans cette position ouverte P2, le capot 10 libère l'ouverture d'éjection 12, et la structure d'éjection 9 est située à l'intérieur de cette ouverture d'éjection 12. De plus, les portes 14 sont positionnées dans le canal 4 afin de bloquer la sortie du flux G1 en flux direct par l'arrière. Une partie du flux G1 est ainsi déviée vers la structure d'éjection 9, et est éjectée à travers cette structure d'éjection 9, comme illustré par la flèche H sur la figure 6C, générant ainsi l'inversion de poussée.

Ainsi, dans la position fermée P1, la structure d'éjection 9 est amenée dans le logement 18 de la nacelle 1. Elle n'est donc pas positionnée au niveau de l'ouverture d'éjection 12, ce qui permet de libérer de la place au niveau de l'ouverture d'éjection 12, et de réduire l'encombrement de l'inverseur de poussée 7 ainsi que sa masse. Le gain de place ainsi obtenu peut, notamment, être utilisé pour y agencer différents équipements ou systèmes, et en particulier un ou plusieurs panneaux d'atténuation acoustique 31.

Dans un mode de réalisation préféré comprenant des déflecteurs orbitaux 15A, 15B particuliers décrits ci-dessous, le nombre de déflecteurs orbitaux 15 de la structure d'éjection 9, par exemple entre 1 et 6 déflecteurs orbitaux 15, est très réduit par rapport au nombre de déflecteurs orbitaux usuels de grilles d'éjection classiques à cascades, ce qui permet notamment de réduire l'encombrement et la masse de la structure d'éjection 9, ainsi que de prévoir un logement 18 de taille réduite pour accueillir la structure d'éjection 9.

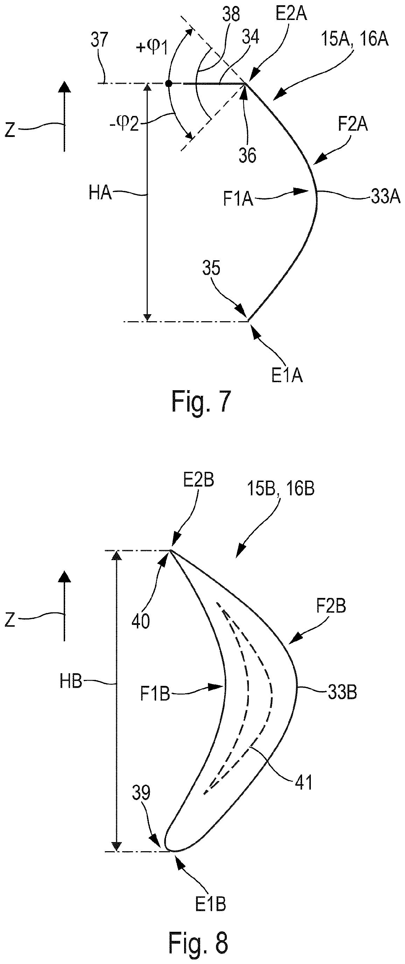

Dans ce mode de réalisation préféré avec un nombre réduit de déflecteurs orbitaux 15, par exemple avec deux déflecteurs orbitaux comme sur l'exemple des figures 2 à 6C, au moins l'un ou plusieurs des déflecteurs orbitaux 15 peuvent correspondre au déflecteur représenté schématiquement dans un premier mode de réalisation 15A sur la figure 7 ou au déflecteur représenté schématiquement dans un second mode de réalisation 15B sur la figure 8.

Plus généralement, le déflecteur représenté schématiquement dans le premier mode de réalisation 15A, 16A sur la figure 7 et dans le second mode de réalisation 15B, 16B sur la figure 8 peut correspondre à un déflecteur orbital 15 ou à un déflecteur latéral 16 de la structure d'éjection 9.

Quel que soit le mode de réalisation considéré, comme représenté sur les figures 7 et 8, le déflecteur 15A, 16A ou 15B, 16B comprend une plaque déflectrice 33A, 33B. La plaque déflectrice 33A, 33B présente une face dite face amont F1A, F1B qui est concave et une face dite aval F2A, F2B qui est convexe. La face amont F1A, F1B est située vers l'amont et la face aval F2A, F2B est située vers l'aval, par rapport au sens d'écoulement du flux G1. La plaque déflectrice 33A, 33B présente également une extrémité dite d'entrée E1A, E1B par laquelle le flux H arrive sur la plaque déflectrice 33A, 33B et une extrémité dite de sortie E2A, E2B au niveau de laquelle le flux H quitte le déflecteur et sort de la structure d'éjection 9.

Dans le premier mode de réalisation représenté sur la figure 7, le déflecteur 15A, 16A est pourvu d'un becquet 34. Le becquet 34 correspond à une plaquette qui est, par exemple, agencée sensiblement orthogonalement à une direction dite verticale (correspondant à la direction Z de la figure 4, orthogonale aux directions X et Y) passant par le point 35 (de l'extrémité d'entrée E1A) le plus en amont et le point 36 (de l'extrémité de sortie E2A) le plus en amont de la plaque déflectrice 33A.

Plus généralement, le becquet 34 du déflecteur 15A, 16A correspond à une plaquette agencée de manière à présenter, par rapport à une direction 37 (correspondant à la direction X ou à la direction Y de la figure 4) orthogonale à la direction verticale Z, un angle compris dans un domaine de valeurs (d'angles) 38. Ce domaine de valeurs 38 est défini entre des valeurs +ϕ1 et -ϕ2 (« + » étant défini dans le sens de la flèche Z et « - » étant défini en sens opposé à celui de la flèche Z) par rapport à la direction 37. ϕ1 et ϕ2 sont des valeurs angulaires qui sont égales dans l'exemple de la figure 7. Elles peuvent également être différentes. ϕ1 et ϕ2 sont des valeurs angulaires non nulles, inférieures ou égales à 60° et de préférence inférieures ou égales à 45°.

De plus, de préférence, le becquet 34 présente une largeur qui est inférieure ou égale à la moitié de la hauteur HA de la plaque déflectrice 33A. La hauteur HA correspond à la longueur selon la direction verticale Z de la plaque déflectrice 33A.

Dans l'exemple représenté sur la figure 7, la plaque déflectrice 33A présente une épaisseur constante. Dans une variante (non représentée) de ce premier mode de réalisation, la plaque déflectrice 33A peut présenter une épaisseur variable, comme dans le second mode de réalisation 15B, 16B représenté sur la figure 8.

Dans ce second mode de réalisation 15B, 16B de la figure 8, la plaque déflectrice 33B du déflecteur 15B, 16B présente une forme géométrique générale sensiblement de lunule (en section transversale), pour laquelle la face amont F1B et la face aval F2B de la plaque déflectrice 33B présentent des profils courbes différents

De préférence, l'épaisseur maximale de la plaque déflectrice 33B est inférieure à 40 % de la hauteur HB de ladite plaque déflectrice 33B. La hauteur HB correspond à la longueur selon la direction verticale Z de la plaque déflectrice 33B. De plus, les directions de la face amont F1B et de la face aval F2B, à la fois à l'extrémité d'entrée E1B et à l'extrémité de sortie E2B, sont des paramètres variables. Ainsi, en adaptant ces paramètres, on est en mesure d'optimiser le profil de chacune des faces amont et aval et ainsi d'optimiser le profil global du déflecteur 15B, 16B, pour obtenir les effets recherchés sur l'écoulement.

Dans une réalisation préférée, la plaque déflectrice 33B est pourvue, dans son corps, d'un espace interne 41 représenté en tirets sur la figure 8. Cet espace interne 41 est fermé et creux. En section transversale, l'espace interne 41 peut, par exemple, présenter une forme (de taille réduite) qui est similaire à celle du contour externe de la plaque déflectrice 33B. Cette réalisation préférée permet de réduire la masse du déflecteur 15B, 16B.

Les différentes caractéristiques des déflecteurs orbitaux 15 utilisés dans la structure d'éjection 9, en particulier leur nombre, leur mode de réalisation, leur taille et leur agencement, peuvent être choisis en fonction des propriétés et caractéristiques envisagées pour la structure d'éjection 9 et donc pour l'inverseur de poussée 7.

Dans le mode de réalisation, représenté sur la figure 6C, la structure d'éjection 9 comprend deux déflecteurs orbitaux 15. Ces deux déflecteurs orbitaux 15 sont agencés l'un derrière l'autre, de l'avant vers l'arrière, de manière à créer des voies d'éjection V1, V2 et V3 dans l'ouverture d'éjection 12. Ces voies d'éjection V1, V2 et V3 présentent des distances D1, D2 et D3 longitudinales à l'extrémité de sortie de la structure d'éjection 9, à savoir :
- la distance D1 entre une extrémité avant 12A de l'ouverture d'éjection 12 et le déflecteur orbital 15 le plus en avant ;
- la distance D2 entre les deux déflecteurs orbitaux 15 ; et
- la distance D3 entre le déflecteur orbital 15 le plus en arrière et une extrémité arrière 12B de l'ouverture d'éjection 12.

Dans l'exemple de la figure 6C, les distances D1, D2 et D3 sont différentes et choisies de manière à optimiser l'éjection du flux à travers les voies d'éjection V1, V2 et V3 et à obtenir les propriétés recherchées de l'inverseur de poussée 7 concernant notamment l'éjection. Dans une variante de réalisation (non représentée), il est également envisageable que certaines des distances D1, D2 et D3 ou toutes les distances D1, D2 et D3 soient égales. Le réglage des distances D1 à D3 est un paramètre important pour modifier la performance de la structure d'éjection 9 et ainsi de l'inverseur de poussée 7. En particulier, comme l'écoulement G1 (figure 1) arrivant vers l'inverseur de poussée 7 n'est pas uniforme, on peut adapter l'écartement des déflecteurs orbitaux 15 et donc les distances D1 à D3 pour optimiser l'écoulement H traversant la structure d'éjection 9.

De plus, dans l'exemple de la figure 6C, les deux déflecteurs orbitaux 15 sont alignés radialement. Dans une variante de réalisation (non représentée), il est également envisageable que les déflecteurs orbitaux de la structure d'éjection soient décalés radialement l'un par rapport à l'autre. Ce décalage radial permet, notamment, de participer à l'obtention de caractéristiques d'écoulement particulières recherchées pour la structure d'éjection 9.

En outre, dans l'exemple de la figure 6C, les deux déflecteurs orbitaux 15 sont identiques. Dans une variante de réalisation (non représentée), il est également envisageable que les déflecteurs orbitaux de la structure d'éjection soient différents. Ces différences peuvent, par exemple, concerner la hauteur des déflecteurs et la géométrie des faces amont et/ou aval des plaques déflectrices des déflecteurs orbitaux.

Par conséquent, avec le mode de réalisation préféré décrit ci-dessus, on dispose d'une grande flexibilité pour réaliser la structure d'éjection 9. En effet, il est, notamment, possible de faire varier l'un, plusieurs ou l'ensemble des paramètres suivants des déflecteurs orbitaux 15 et/ou des déflecteurs latéraux 16 pour obtenir les propriétés souhaitées de la structure d'éjection 9 :
- leur nombre ;
- leurs caractéristiques individuelles, dont leur forme et taille ;
- leur emplacement dans la structure d'éjection, c'est-à-dire aussi bien leur position longitudinale (selon l'axe X) que leur position radiale (selon l'axe Z) dans la structure d'éjection, notamment pour définir les caractéristiques des voies d'éjection ; et
- une variation de leurs caractéristiques individuelles en fonction de leur emplacement dans la structure d'éjection.

Toute combinaison de ces paramètres peut être mise en place dans un moteur, en fonction des caractéristiques du moteur sur lequel ces déflecteurs orbitaux sont montés. Les paramètres variables précédents ont un impact important sur les performances de l'inverseur de poussée 7 et ils peuvent donc être choisis pour réaliser une structure d'éjection 9 et un inverseur de poussée 7 adaptés au moteur et à la nacelle dans lesquels ils sont intégrés de manière à obtenir les propriétés et les performances recherchées, et notamment pour générer un écoulement maîtrisé sur tout le périmètre moteur, cet écoulement étant par exemple adapté à une cartographie d'écoulement souhaitée dépendant notamment de caractéristiques du moteur et de contraintes aérodynamiques de l'aéronef.

Le nombre et les formes des déflecteurs orbitaux 15 permettent de répondre à des performances en débit (débit suffisant pour éviter les problèmes de fonctionnement de la soufflante du moteur) et en efficacité (effort de contre-poussée). L'augmentation de l'efficacité obtenue permet de diminuer fortement la course de l'inverseur de poussée 7 et notamment du capot mobile 10, une diminution de 40% d'ouverture étant envisageable pour certains modes de réalisation, ce qui présente un avantage important, en particulier pour l'aspect cinématique, la longueur des actionneurs, la chaîne de cote, la masse, ...

Dans le cadre de la présente invention, une telle structure d'éjection 9 avec un nombre réduit de déflecteurs orbitaux 15 présente surtout l'avantage d'avoir un encombrement réduit, ce qui lui permet d'être agencée facilement dans un logement 18 (de taille réduite) dans la nacelle 1 en position fermée.

La nacelle 1, telle que décrite ci-dessus, présente donc de très nombreux avantages. En particulier :
- dans la position fermée P1, la structure d'éjection 9 est amenée dans le logement 18 de la nacelle 1, ce qui permet de libérer de la place au niveau de l'ouverture d'éjection 12, et de réduire l'encombrement de l'inverseur de poussée 7 ainsi que sa masse ;
- la réalisation d'un caisson 20 rigide permet, notamment, de réduire le nombre de raidisseurs, et d'obtenir un gain de masse et de place ;
- la suppression des raidisseurs permet, notamment, de prévoir des déflecteurs 15, 16 ayant une hauteur plus importante, ce qui permet d'augmenter leur efficacité et plus globalement celle de la structure d'éjection 9 ;
- le gain de place obtenu dans la nacelle 1 peut, notamment, être utilisé pour agencer différents équipements ou systèmes et plus particulièrement un ou des panneaux d'atténuation acoustique 30, 31, en particulier à l'intérieur du caisson 20 ; et
- la réalisation rigide du caisson 20 permet de maîtriser la chaîne de cotes et le jeu apparaissant à l'avant de la porte 14 qui génère habituellement des pertes aérodynamiques.

## Revendications

1. Nacelle pour un moteur d'aéronef, ladite nacelle (1) comportant au moins un inverseur de poussée (7) comprenant une structure d'éjection (9) et un capot (10) mobile en translation, la structure d'éjection (9) étant également mobile en translation et étant rendue solidaire dudit capot (10) de manière à former avec ce dernier un ensemble mobile (17), ledit ensemble mobile (17) étant configuré pour pouvoir être amené, alternativement, dans l'une ou l'autre des deux positions (P1, P2) suivantes :
- une position fermée (P1), dans laquelle la structure d'éjection (9) est introduite, au moins en partie, dans un logement (18) formé dans la nacelle (1), et dans laquelle le capot (10) ferme une ouverture d'éjection (12) dans la nacelle (1) ; et
- une position ouverte (P2), dans laquelle le capot (10) libère l'ouverture d'éjection (12) dans la nacelle (1) et la structure d'éjection (9) est située dans ladite ouverture d'éjection (12),
**caractérisée en ce que** le capot (10) comprend au moins un caisson (20) pourvu d'un cadre avant (21) réalisé en une seule pièce.

2. Nacelle selon la revendication 1,
**caractérisée en ce que** ledit logement (18) est formé dans un carter (19) de soufflante de la nacelle (1).

3. Nacelle selon l'une des revendications 1 et 2,
**caractérisée en ce que** l'inverseur de poussée (7) comporte une pluralité de portes (14) configurées pour pouvoir se déployer à l'intérieur d'un canal (4) d'écoulement de flux afin de dévier le flux vers la structure d'éjection (9) dans la position ouverte (P2), et **en ce que** lesdites portes (14) sont articulées sur ledit cadre avant (21) du caisson (20).

4. Nacelle selon la revendication 3,
**caractérisée en ce qu'**au moins certaines desdites portes (14) sont pourvues d'au moins un panneau d'atténuation acoustique (30).

5. Nacelle selon l'une quelconque des revendications 1 à 4,
**caractérisée en ce qu'**au moins une paroi interne (23) du caisson (20) est pourvue d'au moins un panneau d'atténuation acoustique (31).

6. Nacelle selon l'une quelconque des revendications précédentes,
**caractérisée en ce que** la structure d'éjection (9) comprend au moins deux chariots mobiles (32), et **en ce que** chacun desdites chariots mobiles (32) est monté coulissant dans des rails (43).

7. Nacelle selon la revendication 6,
**caractérisée en ce que** chacun des chariots mobiles (32) comporte des déflecteurs (15) qui sont liés ensemble à l'aide de deux poutres d'extrémité (44), et **en ce que** chacune desdites poutres d'extrémité (44) est configurée pour pouvoir coulisser dans l'un desdits rails (43).

8. Nacelle selon l'une des revendications 6 et 7,
**caractérisée en ce que** le capot (10) est formée d'au moins deux parties (45) de capot, et **en ce que** chacune desdites parties (45) de capot est montée coulissante dans lesdits rails (43).

9. Nacelle selon l'une quelconque des revendications précédentes, **caractérisée en ce que** la structure d'éjection (9) comporte une pluralité de déflecteurs (15).

10. Nacelle selon la revendication 9,
**caractérisée en ce qu'**au moins certains desdits déflecteurs (15A, 16A) comprennent une plaque déflectrice (33A) présentant une face concave dite face amont (F1A) et une face convexe dite face aval (F2A) ainsi qu'une extrémité dite d'entrée (E1A) et une extrémité dite de sortie (E2A), et **en ce que** chacun desdits déflecteurs (15A, 16A) est pourvu d'un becquet (34) qui est solidaire de l'extrémité de sortie (E2A) de la plaque déflectrice (33A) et qui est agencé transversalement à la plaque déflectrice (33A).

11. Nacelle selon l'une des revendications 9 et 10,
**caractérisée en ce qu'**au moins certains desdits déflecteurs (15B, 16B) comprennent une plaque déflectrice (33B) présentant une face concave dite face amont (F1B) et une face convexe dite face aval (F2B) et **en ce que** la face amont (F1B) et la face aval (F2B) de chaque plaque déflectrice (33B) présentent des profils courbes différents.

12. Nacelle selon l'une quelconque des revendications 9 à 11,
**caractérisée en ce qu'**au moins certains desdits déflecteurs (15, 16) de la structure d'éjection (9) présentent au moins l'une des caractéristiques suivantes :
- au moins deux desdits déflecteurs sont décalés radialement l'un par rapport à l'autre ;
- au moins certains desdits déflecteurs sont agencés pour créer des voies d'éjection (V1 à V3) dont au moins certaines présentent des largeurs (D1, D2, D3) variables ; et
- au moins certains desdits déflecteurs présentent des caractéristiques variables en fonction de leur emplacement dans la structure d'éjection (9).
